# EUROPÄISCHE PATENTSCHRIFT

(11) **EP 1 771 079 B1**
(45) Veröffentlichungstag und Bekanntmachung des Hinweises auf die Patenterteilung: **03.09.2008**
(21) Anmeldenummer: 05773331.3
(22) Anmeldetag: 08.07.2005
(51) Int. Cl.: A23G 1/00

(54) **VERBESSERTE KAKAOHALTIGE MISCHUNGEN**
IMPROVED MIXTURES CONTAINING COCOA
MELANGES AMELIORES CONTENANT DU CACAO

(30) Priorität: 21.07.2004 DE 102004035373
(43) Veröffentlichungstag der Anmeldung: 11.04.2007
(73) Patentinhaber: Südzucker Aktiengesellschaft Mannheim/Ochsenfurt, 68165 Mannheim (DE)
(72) Erfinder: DÖRR, Tillmann, 67591 Hohen-Sülzen (DE); GUDERJAHN, Lutz, 67591 Offstein (DE); KOWALCZYK, Jörg, 67304 Eisenberg-Steinborn (DE)
(74) Vertreter: Schrell, Andreas
(86) Internationale Anmeldenummer: PCT/EP2005/007389
(87) Internationale Veröffentlichungsnummer: WO 2006/007993

(56) Entgegenhaltungen:
- EP-A- 0 317 917
- EP-A- 1 393 637

## Beschreibung

Die vorliegende Erfindung betrifft verbesserte granulat- oder pulverförmige kakaohaltige Mischungen, insbesondere zur Verwendung als Instant-Kakaogetränkpulver, enthaltend mindestens eine Kakaokomponente, mindestens einen, vorzugsweise mehrere Zusatzstoff(e) und mindestens 39 bis 90 Gew.-% Palatinose sowie die Verwendung von Palatinose in pulverförmigen Kakaomischungen.

Kakaohaltige Mischungen, insbesondere zur Herstellung von Instantgetränken, sind bekannt. Üblicherweise werden derartige kakaohaltige Getränkepulver in trockener, rieselfähiger Form angeboten und enthalten in der Regel Kakaopulver, mindestens eine süßende Komponente wie Saccharose, Glucose oder Maltodextrin sowie verschiedene Ergänzungsstoffe wie Lecithin als Emulgator oder Vanillin als Aromastoff. Diese pulverförmigen Mischungen sind vielfältigen Anforderungen ausgesetzt. Sie sollen einerseits möglichst lange lagerfähig, das heißt insbesondere rieselfähig, dosierfähig sowie trocken bleiben. Darüber hinaus sollen sie ihre typischen Geschmacks- und Geruchskomponenten auch über längere Zeit nicht verlieren. Es ist andererseits wesentlich, dass derartige Mischungen eine möglichst hohe Löslichkeit in Milch oder in Wasser aufweisen und sich nach Herstellung des fertigen Getränks ein ausgewogenes Süßeprofil, ein attraktiver Geschmack und ein angenehmes Mundgefühl, das heißt eine angenehme Organoleptik ausbildet. Schließlich ist es auch wesentlich, dass sowohl das Pulver als auch die hergestellten Getränke hinsichtlich ihrer Farbe und Farbverteilung für den Konsumenten attraktiv sind und insbesondere ein homogenes Farbprofil aufweisen. Es besteht daher ein ständiger Bedarf nach hinsichtlich dieser Eigenschaften verbesserter Kakaomischungen zur Herstellung von Fertiggetränken.

Die natürlich, zum Beispiel in Honig, vorkommende reduzierende Disaccharid-Ketose Palatinose (6-O-α-D-Glucopyranosyl-fructose; Isomaltulose) wird hauptsächlich als Ausgangsstoff zur Herstellung von Isomalt, eines nahezu äquimolaren Gemisches der Diastereomere 6-O-α-D-Glucopyranosyl-D-sorbit (1,6-GPS) und 1-O-α-D-Glucopyranosyl-D-mannit (1,1-GPM) eingesetzt. Als süßendes Agens wird Palatinose aufgrund seiner geringen Süßkraft und des daraus resultierenden Geschmacks hauptsächlich in Kombination mit Zuckeraustauschstoffen und/oder Süßstoffen in Lebensmitteln eingesetzt. Teilweise wird Palatinose auch eingesetzt, um den unangenehmen Geschmack anderer Lebensmittel zu überdecken. Aufgrund des erst im Dünndarmbereich erfolgenden verzögerten Abbaus der Palatinose wird diese auch in speziellen Lebensmitteln für Sportler eingesetzt, um den oxidativen Metabolismus aufrechtzuerhalten.

Die Verwendung von Palatinose als süßendes Agens in Kombination mit anderen Zuckeraustauschstoffen oder Süßstoffen wird beispielsweise in der WO 93/02566 beschrieben. Die WO 93/02566 beschreibt Schokoladenerzeugnisse, bei denen Zucker vollständig oder teilweise durch Produkte wie Inulin und Fructooligosaccharide ersetzt ist. Die Schokoladenzusammensetzung kann darüber hinaus Zuckeraustauschstoffe wie Xylit, Isomalt und/oder Palatinose enthalten.

Die JP 1989-1I74093 beschreibt ein zur Herstellung von Lebensmitteln und Backwaren eingesetztes Stoffgemisch, das beispielsweise Palatinose beziehungsweise reduzierte Palatinose in Kombination mit Fructose enthält. Das Stoffgemisch kann beispielsweise zur Herstellung von Milcherzeugnissen, Schokolade, Kaugummi etc. eingesetzt werden.

Die EP 0 317 917 A2 beschreibt ein Verfahren zur Herstellung von zuckerfreien, diätetischen und/oder zahnschonenden Schokoladen. Als Zuckeraustauschstoffe werden unter anderem Sorbit, Palatinit^{®}, Leucrose und Palatinose verwendet.

Die JP 02234651 A2 beschreibt die Herstellung von antikariogenen Lebensmitteln und Getränken, wobei als süßendes Agens ein Gemisch aus Palatinose und Palatinose-Honig, einem bei der Palatinose-Herstellung anfallenden Nebenprodukt, eingesetzt wird.

Die EP 390 438 B1 beschreibt ein Süßungsmittelgemisch, das Sucralose und Palatinose umfasst, wobei Sucralose und Palatinose synergistische Effekte zeigen. Das Süßungsmittelgemisch kann beispielsweise zur Herstellung von Getränken und Süßwaren eingesetzt werden.

Die JP 01196258 A2 beschreibt Getränke, die coffeinfreien Tee/Kaffee, Tryptophan und/oder Valerian und Stärkehydrolysate enthaltendes Milchpulver umfassen. Als Beispiel wird ein coffeinfreier Instant-Kaffee beschrieben, der Tryptophan, Aspartam und Palatinose enthält.

Die JP 62091162 A beschreibt Aspartam-enthaltende Lebensmittel und Getränke, die gegebenenfalls Palatinose enthalten können.

Die Verwendung von Palatinose in Lebensmitteln und Getränken zum Überdecken des unangenehmen Geschmackes bestimmter Lebensmittelbestandteile ist beispielsweise in der EP 0 809 939 A1 beschrieben. Die EP 0 809 939 A1 beschreibt einen Milchsäurebakterien und Bifidobakterien enthaltenden Joghurt, der raffiniertes Fischöl mit einem hohen Anteil ungesättigter Fettsäuren sowie ein süßendes Agens, beispielsweise Palatinose enthält. Die Zugabe von Palatinose soll die Entwicklung des typischen Fisch-Geschmackes und Fisch-Geruches verhindern.

Die JP 63152950 A2 beschreibt die Herstellung von Gemüse-Gelee-Erzeugnissen unter Verwendung von Gemüsearten und einem Gelierungsmittel, wobei Palatinose und andere Zusätze wie Zimt eingesetzt werden, um den unangenehmen Geruch von Gemüsebestandteilen zu überdecken.

Die Verwendung von Palatinose zur Aufrechterhaltung des oxidativen Metabolismus ist beispielsweise in der japanischen ungeprüften Patentanmeldung Hei 11 (2000)-116754 beschrieben, die Lebensmittel und Getränke für Sportler betrifft, die Palatinose als Saccharid enthalten. Palatinose wird insbesondere in Sportler-Lebensmitteln eingesetzt, um den oxitativen Metabolismus aufrecht zu erhalten.

Obgleich sowohl kakaohaltige Mischungen zur Herstellung von Instantgetränken als auch Palatinose selbst seit langem bekannt sind, ist es nicht bekannt, welche Zusammensetzung ein Instant-Getränkepulver zur Herstellung von kakaohaltigen Getränken aufweisen muss, damit es gegenüber üblichen Saccharose-, Glucose-oder Maltodextrin-basierten Kakaomischungen verbessert ist, insbesondere eine verbesserte Lagerfähigkeit und/oder eine verbesserte Riesel- und Dosierfähigkeit und/oder eine verringerte Hygroskopizität und/oder eine verbesserte Löslichkeit in Milch beziehungsweise bei milchpulverhaltigen Formulierungen des Getränkepulvers in Wasser bereitstellt, wobei gleichzeitig ein ausgewogenes Süßeprofil, ein homogenes Farbprofil, ein attraktiver Geschmack und ein ähnliches Mundgefühl wie bei bekannten, zum Beispiel Saccharose-basierten Produkten auftritt.

Der vorliegenden Erfindung liegt daher das technische Problem zugrunde, eine derartige hinsichtlich der genannten Eigenschaften verbesserte pulverförmige Kakaomischung bereitzustellen, insbesondere zur Verwendung als Instant-Kakaogetränkepulver.

Die vorliegende Erfindung löst das ihr zugrundeliegende technische Problem durch die Bereitstellung einer granulat- oder pulverförmigen Kakaomischung, enthaltend 9 bis 60 Gew.-% (bezogen auf das Gesamttrockengewicht der Kakaomischung) mindestens einer Kakaokomponente, 1 bis 40 Gew.-% (bezogen auf das Gesamttrockengewicht der Kakaomischung) mindestens eines Zusatzstoffes, vorzugsweise mehrerer Zusatzstoffe, und 20 bis 90 Gew.-%, vorzugsweise 20 bis 50 Gew.-% oder 50 bis 80 Gew.-%, insbesondere 55 bis 75 Gew.-% (bezogen auf das Gesamttrockengewicht der Kakaomischung) Palatinose.

Die vorliegende Erfindung löst das ihr zugrundeliegende technische Problem insbesondere also durch die Bereitstellung einer einen bestimmten Anteil Palatinose aufweisenden granulat- oder pulverförmigen Kakaomischung.

Gemäß der vorliegenden Erfindung lassen sich mittels Palatinose erfindungsgemäß nicht-verklumpende rieselfähige Instant-Getränkepulver in Pulver- oder Granulatform mit erhöhter Lagerfähigkeit und geringem Wasseraufnahmebestreben herstellen. Die erfindungsgemäßen Instant-Getränkepulver lassen sich auch bei kalten Temperaturen rasch und rückstandsfrei in Wasser oder Milch lösen und ergeben so schnell geschmackvolle, trinkfertige Kakao-oder Schokoladegetränke oder kakao- oder schokoladeähnliche Getränke. Vorteilhafterweise kann Palatinose aus Saccharose hergestellt werden. Palatinose wird aus reinen oder während der Zuckerfabrikation anfallenden Saccharose-Lösungen durch Transglucosidierung der Saccharose zu Palatinose unter Verwendung lebender oder toter Zellen von Protaminobacter rubrum oder daraus gewonnener Enzymextrakte herstellen. Palatinose kristallisiert in Form eines Monohydrats. Die Löslichkeit von Palatinose in Wasser beträgt 0,49 g wasserfreie Palatinose pro g Wasser.

Palatinose weist vorteilhafte akariogene Eigenschaften auf, da sie von der menschlichen Mundflora kaum abgebaut wird. Palatinose wird lediglich von den Glucosidasen der menschlichen Dünndarmwand verzögert gespalten, wobei die resultierenden Abbauprodukte Glucose und Fructose resorbiert werden. Dies resultiert, verglichen zu schnell verdaulichen Kohlenhydraten, in einem langsamen Anstieg der Blutglucose. Palatinose benötigt im Unterschied zu schnell verdaulichen, hochglykämischen Lebensmitteln kaum Insulin zur Verstoffwechslung. Trotz der günstigen akariogenen Eigenschaften wird bisher Palatinose im Gegensatz zu Zuckeraustauschstoffen wie Mannit, Sorbit und Isomalt, oder Süßstoffen wie Cyclamat kaum als alleiniger Zucker oder alleiniges süßendes Agens in Lebensmitteln oder Getränken eingesetzt. Dies hängt insbesondere mit dem Geschmack von Palatinose, insbesondere aufgrund der erheblich geringeren Süßkraft im Vergleich zu Saccharose zusammen. Die Süßkraft von 10-%igen wässrigen Palatinose-Lösungen beträgt nur etwa 0,4 der Süßkraft von Zucker. Dazu kommt, dass Palatinose Reversions- und Maillard-Produkte bilden kann.

Im Zusammenhang mit der vorliegenden Erfindung werden unter den erfindungsgemäßen "Instant-Getränkepulvern" in Wasser oder Milch rasch und rückstandslos lösliche Produkte für den Nahrungs-und Süßmittelbereich verstanden, die insbesondere als Pulver, aber auch als Granulate vorliegen. Die Herstellung der Instant-Getränkepulver erfolgt beispielsweise durch Vermischen, Instantisierung oder Coagglomeration von Kakaopulver, Palatinose und gegebenenfalls Zusatzstoffen, wobei insbesondere pulverförmige oder gegebenenfalls granulierte rieselfähige Produkte erhalten werden.

Die Herstellung der erfindungsgemäßen Kakaomischungen kann demgemäß durch einfaches Mischen der Komponenten, also Rohstoffe, zum Beispiel in einem Lödige-Mischer, durch Agglomeration oder mittels Instantisierung erfolgen. Die erfindungsgemäße Vorgehensweise kann insbesondere vorsehen, in einem ersten Schritt die Rohstoffe, insbesondere die Palatinose, zu vermahlen und die vermahlene Palatinose anschließend mit den weiteren Zutaten, insbesondere der Kakaokomponente, und den Zusatzstoffen zu vermischen. Gegebenenfalls kann auf das Vermahlen der Palatinose verzichtet werden. In einer weiteren Ausführungsform kann vorgesehen sein, die Rohstoffe, insbesondere die Palatinose, zu vermahlen und anschließend einer Agglomeration, vorzugsweise im Wirbelschichtverfahren, zuzuführen, wobei die vermahlene Palatinose zusammen mit der Kakaokomponente und den Zusatzstoffen beziehungsweise dem einen Zusatzstoff agglomeriert wird. Gegebenenfalls kann auf die Vermahlung der Palatinose verzichtet werden. In einer weiteren Ausführungsform kann vorgesehen sein, die Rohstoffe, insbesondere die Palatinose, zu vermahlen und unter Dampfeinwirkung mit den Zusatzstoffen und dem Kakaopulver zu instantisieren. Gegebenenfalls kann auf das Vermahlen der Palatinose verzichtet werden. Die Erfindung betrifft daher auch durch Agglomeration, Mischen und/oder Instantisierung der genannten Komponenten hergestellte Kakaomischungen. Selbstverständlich ist es also auch möglich, die für die Kakaomischung verwendeten Bestandteile einer Nassgranulation mit anschließender Trocknung und Konfektionierung, insbesondere Siebung, zu unterziehen, um erfindungsgemäße Kakaomischungen in pulver- oder granulatförmiger Form zu erhalten.

Erfindungsgemäß ist also die Verwendung von Palatinose als süßendes Agens, insbesondere einzig und alleinig in der Kakaomischung vorhandener Zucker, bevorzugt alleiniges körpergebendes süßendes Agens, besonders bevorzugt alleiniges süßendes Agens in der erfindungsgemäßen pulverförmigen Kakaomischung, insbesondere Instant-Kakaogetränkepulver beziehungsweise -granulat, vorgesehen. In einer bevorzugten Ausführungsform ist die Kakaomischung der vorliegenden Erfindung lactosefrei.

Im Zusammenhang mit der vorliegenden Erfindung werden unter dem Begriff "süßendes Agens" Substanzen verstanden, die Süßkraft aufweisen und zum Beispiel Lebensmitteln oder Getränken zugesetzt werden, um einen Süßegeschmack hervorzurufen. Im Zusammenhang mit der vorliegenden Erfindung werden die "süßenden Agenzien" unterteilt in "Zucker" wie Saccharose, Glucose oder Fructose, die Körper und Süßkraft geben sowie "Süßungsmittel", also Stoffe, die keine Zucker sind aber trotzdem Süßkraft aufweisen, welche wiederum untergliedert werden in "Zuckeraustauschstoffe", also süßende Agenzien, die einen Körper und einen physiologischen Brennwert zusätzlich zu einer Süßkraft aufweisen (körpergebende Süßungsmittel), und "Intensivsüßstoffe", also Stoffe, die in der Regel eine sehr hohe Süßkraft, aber keinen Körper und in der Regel keinen oder nur einen geringfügigen physiologischen Brennwert aufweisen.

Die Erfindung sieht daher die Bereitstellung einer Kakaomischung, insbesondere in Form eines Pulvers oder eines Granulats vor, die 9 bis 60 Gew.-% mindestens einer Kakaokomponente, vorzugsweise 20 bis 30 Gew.-% (jeweils bezogen auf das Gesamttrockengewicht der Kakaomischung) einer Kakaokomponente sowie 1 bis 40 Gew.-% (bezogen auf das Gesamttrockengewicht der Kakaomischung) mindestens eines Zusatzstoffes und 20 bis 90 Gew.-%, vorzugsweise 20 bis 50 Gew.-% oder 50 bis 80 Gew.-% (jeweils bezogen auf das Gesamttrockengewicht der Kakaomischung) Palatinose enthält. In besonders bevorzugter Ausführungsform ist vorgesehen, dass in der granulat- oder pulverförmigen Kakaomischung 55 bis 75 Gew.-% Palatinose (bezogen auf das Gesamttrockengewicht der Kakaomischung) vorhanden sind.

Die Erfindung sieht in bevorzugter Ausführungsform vor, dass als Kakaokomponente in besonders bevorzugter Ausführungsform Kakaopulver, insbesondere entfettetes oder entöltes Kakaopulver, eingesetzt wird.

Im Zusammenhang mit der vorliegenden Erfindung werden unter Zusatzstoffen solche Stoffe verstanden, die der erfindungsgemäßen pulver- oder granulatförmigen Kakaomischung zusätzlich zu Palatinose und der Kakaokomponente hinzugegeben werden können. Demgemäß sind die Zusatzstoffe optional einzusetzende Stoffe und die Erfindung erfasst sowohl erfindungsgemäße Kakaomischungen, die diese Stoffe oder eine Auswahl davon aufweisen ebenso wie Kakaomischungen, die keine oder nicht alle der genannten Zusatzstoffe aufweisen. Die Verwendung der Zusatzstoffe kann je nach Anwendungsgebiet und Anforderungsprofil der Märkte und der Konsumenten individuell zusammengestellt werden.

Im Zusammenhang mit der vorliegenden Erfindung wird unter einem Zusatzstoff zum Beispiel ein Präbiotikum, welches in vorteilhafter Weise die ernährungsphysiologischen Eigenschaften der Kakaomischung positiv beeinflusst, ein Intensivsüßstoff, ein Zucker oder ein Zuckeraustauschstoff, welche die Süßkraft der Kakaomischung beeinflussen, eine fetthaltige Komponente oder ein Milcherzeugnis, welche insbesondere die Art und den Geschmack des erzielten Getränkes beeinflussen, oder ein Ergänzungsstoff verstanden.

Unter einem Ergänzungsstoff werden solche Stoffe verstanden, die insbesondere das Aussehen, den Geschmack, die Organoleptik, den Nährwert, ernährungsphysiologische Eigenschaften, die Verarbeitbarkeit, Lagerfähigkeit oder Gebrauchsfertigkeit der Mischung betreffen.

In einer weiteren bevorzugten Ausführungsform ist also vorgesehen, dass der mindestens eine Zusatzstoff als Präbiotikum, vorzugsweise Inulin, Oligofructose oder Galactooligosaccharid ausgeführt ist.

Im Zusammenhang mit der vorliegenden Erfindung wird unter einem Präbiotikum ein Zusatzstoff verstanden, der selektiv das Wachstum und/oder die Aktivität spezifischer Bakterien im menschlichen oder tierischen Verdauungstakt, insbesondere Bifidobakterien und/oder Lactobacillen so stimuliert, dass gesundheitsfördernde Effekte zu erwarten sind oder auftreten.

Im Zusammenhang mit der vorliegenden Erfindung wird unter einem "Probiotikum" eine lebende mikrobielle Zusatzkomponente verstanden, die durch Stabilisierung oder Verbesserung der mikrobiellen Zusammensetzung im Verdauungstrakt des menschlichen oder tierischen Konsumenten dessen Gesundheit fördert. Derartige probiotische Mikroorganismen, die in Lebens-, Arznei- oder Futtermitteln eingesetzt werden können, sind zum Beispiel: Bifidobacterium wie Stämme *B. adolescentis, B. animalis, B. bifidum, B. longum, B. thermophilum; Enterococccus; Lactobacillus* wie die Stämme *Lb. acidophilus, Lb. brevis, Lb, casei, Lb. cellobiosus, Lb. crispatus, Lb. delbrueckii subsp. Bulgaricus, Lb. fermentum, Lb. GG, Lb. johnsonii, Lb. Iactis, Lb. plantarum, Lb. reuteri, Lb. rhamnosus, Lb. salivarius; Bacillus cereus toyoi; Bacillus cereus; Leuconostoc; Pediococcus acidilactici; Propionibacterium; Streptococcus* wie die Stämme *S. cremoris, S. infantarius, S. intermedius, S. Iactis, S. salivarius subsp. thermophilus* (vergleiche Fuller, J. Appl. Bacteriol. (1989)). Bevorzugte Probiotika sind Bakterien der Gattungen *Lactobacillus* und *Bifidobacterium.*

Im Zusammenhang mit der vorliegenden Erfindung wird unter "Synbiotikum" ein Gemisch aus mindestens einem Präbiotikum und mindestens einem Probiotikum verstanden, das durch Verbesserung der Überlebensrate und Erhöhung der Anzahl gesundheitsfördernder lebender mikrobieller Organismen im Gastrointestinal-Trakt die Gesundheit des menschlichen oder tierischen Konsumenten fördert, insbesondere durch selektive Stimulierung des Wachstums und/oder der Stoffwechsel-Aktivität der mikrobiellen Organismen.

In einer weiteren bevorzugten Ausführungsform ist vorgesehen, dass der mindestens eine Zusatzstoff als Probiotikum, vorzugsweise Bifidobakterien oder Lactobakterien ausgeführt ist. Derartige probiotische Bakterienkulturen können bevorzugt als Trockenkulturen oder Dauerkulturen ausgeführt sein. In einer weiteren bevorzugten Ausführungsform ist vorgesehen, Symbiotika, das heißt Mischungen von Probiotika und Präbiotika, einzusetzen.

Die Erfindung sieht auch vor, dass der mindestens eine Zusatzstoff als fetthaltige Komponente, zum Beispiel Kakaomasse, gehärtetes oder ungehärtetes Pflanzenfett oder ähnliches, zum Beispiel auch Fettersatzstoff, ausgeführt ist.

Die Erfindung sieht in einer weiteren bevorzugten Ausführungsform vor, dass der mindestens eine Zusatzstoff als Milcherzeugnis, insbesondere lactosefreies Milcherzeugnis, zum Beispiel Magermilchpulver, Vollmilchpulver, lactosefreies Mager- oder Vollmilchpulver, Molkenextrakt, Molkenerzeugnis ausgeführt ist. In dieser Ausführungsform, also einer Kakaomischung enthaltend Palatinose, ein Milcherzeugnis und eine Kakaokomponente, ist bevorzugt vorgesehen, das Milcherzeugnis in einer Menge von 20 bis 40 Gew.-% (bezogen auf das Gesamtgewicht der Kakaomischung) einzusetzen. Insbesondere in dieser letztgenannten Ausführungsform ist bevorzugt vorgesehen, die Palatinose in einer Menge von 20 bis 50 Gew.-% (bezogen auf das Gesamtgewicht der Kakaomischung) einzusetzen.

In einer weiteren bevorzugten Ausführungsform ist vorgesehen, dass der mindestens eine Zusatzstoff ein Zucker, zum Beispiel Saccharose, Glucose, Fructose, Maltose, Lactose oder eine Mischung zweier oder mehrerer davon ist. Der mindestens eine Zusatzstoff kann auch Malzextrakt sein. In einer besonders bevorzugten Ausführungsform ist gemäß der Erfindung jedoch vorgesehen, dass die pulverförmige oder granulatförmige Kakaomischung der vorliegenden Erfindung mit Ausnahme von Palatinose zuckerfrei oder lactosefrei ist.

Die Erfindung betrifft selbstverständlich in einer Ausführungsform auch erfindungsgemäße Kakaomischungen, die neben ihrem Gehalt an mindestens 20 Gew.-% Palatinose Süßungsmittel enthalten, zum Beispiel Zuckeraustauschstoffe oder Intensivsüßstoffe.

In einer Ausführungsform der Erfindung ist vorgesehen, dass der Zuckeraustauschstoff insbesondere ein Zuckeralkohol ist und insbesondere ausgewählt ist aus der Gruppe bestehend aus Isomalt, 1,1-GPM (1-O-α-D-Glucopyranosyl-D-mannit), 1,6-GPS (6-O-α-D-Glucopyranosyl-D-sorbit), 1,1-GPS (1-O-α-D-Glucopyranosyl-D-sorbit), Maltodextrine, Lactit, Maltit, Erythrit, Xylit, Mannit, Sorbit, Maltitsirup, hydrierte und nichthydrierte Stärkehydrolysate und einer Mischung zweier oder mehrerer davon.

In einer weiteren bevorzugten Ausführungsform ist vorgesehen, dass der Intensivsüßstoff ausgewählt ist aus der Gruppe bestehend aus Sucralose, Natriumcyclamat, Acesulfam K, Neohesperidin-Dihydrochalkon, Glycyrrhizin, Steveosid, Monellin, Thaumatin, Aspartam, Dulcin, Saccharin, Naringin-Dihydrochalkon, Neotame und einer Mischung zweier oder mehrerer davon.

Die Erfindung sieht in einer besonders bevorzugten Ausführungsform vor, dass der mindestens eine Zusatzstoff als Ergänzungsstoff ausgeführt ist und aus der Gruppe bestehend aus Malzextrakt, Aromastoffen, Farbstoffen, Geschmacksstoffen, Mineralstoffen wie Natrium oder Calzium, insbesondere Salzen wie Natriumchlorid, Vitaminen, Folsäure, Emulgatoren, Lecithin, Ballaststoffen, Omega-3-Fettsäuren, Triglyzerin mittlerer Kettenlängen, Phythoöstrogene und Ascorbinsäuresalze oder Kombinationen davon ausgewählt ist. In bevorzugter Ausführungsform enthält die erfindungsgemäße Kakaomischung zum Beispiel als Aromastoff Vanillin.

Erfindungsgemäß ist ebenfalls vorgesehen, dass die Instant-Getränkepulver auch 0,1 Gew.-% bis 5 Gew.-% Salze organischer oder anorganischer Säuren enthalten können. Vorzugsweise werden Salze wie NaCl, Trinatriumcitrat oder ein Phosphat wie K₂HPO₄ oder KH₂PO₄ eingesetzt.

Erfindungsgemäß ist ebenfalls vorgesehen, dass die erfindungsgemäßen Instant-Getränkepulver Fließhilfsmittel enthalten. Unter einem "Fließhilfsmittel" oder "Fließmittel" werden sogenannte Rieselhilfen verstanden, die beispielsweise bei klebrigen oder stockenden Pulvern deren freies Fließen bewirken. Vorzugsweise handelt es sich bei dem erfindungsgemäß verwendeten Fließhilfsmittel um Siliciumdioxid.

Erfindungsgemäß ist ebenfalls vorgesehen, dass die Instant-Getränkepulver darüber hinaus natürliche und/oder synthetische Farbstoffe enthalten können. Bei den natürlichen Farbstoffen kann es sich beispielsweise um Farbstoffe pflanzlicher Herkunft, wie Carotinoide, Flavonoide und Anthocyane, Farbstoffe tierischer Herkunft wie Cochenille, anorganische Pigmente wie Titandioxid, EisenoxidPigmente und Eisenhydroxid-Pigmente handeln. Als natürliche Farbstoffe können ebenfalls sekundär gebildete Farbstoffe wie die Produkte der enzymatischen Bräunung, beispielsweise Polyphenole und Produkte der nicht-enzymatischen Bräunung wie Melanoidine eingesetzt werden. Erfindungsgemäß ist ferner vorgesehen, dass als natürliche Farbstoffe Erhitzungsprodukte, zum Beispiel Karamele und Zuckercouleur eingesetzt werden können. Für die erfindungsgemäßen Instant-Getränkepulver können darüber hinaus synthetische Farbstoffe wie Azo-, Triphenylmethan-, Indigoid-, Xanthen- und Chinolin-Verbindungen eingesetzt werden. Vorzugsweise sind die erfindungsgemäß verwendeten synthetischen Farbstoffe in besonderem Maße wasserlöslich.

Erfindungsgemäß können die erfindungsgemäßen Instant-Getränkepulver zusätzlich mit natürlichen oder synthetischen Vitaminen ausgewählt aus der Gruppe bestehend aus Vitamin A, Vitamin B₁, Vitamin B₂, Vitamin B₃, Vitamin B₅, Vitamin B₆, Vitamin B₁₂, Vitamin B-Komplex, Vitamin C, Vitamin D, Vitamin E, Vitamin F und Vitamin K angereichert sein. Die erfindungsgemäßen Instant-Getränkepulver können darüber hinaus zusätzliche Mineralstoffe und Spurenelemente enthalten.

Die Erfindung sieht in einer besonders bevorzugten Ausführungsform vor, dass die pulverförmige oder granulatförmige Kakaomischung der vorliegenden Erfindung nicht nur einen, sondern mehrere Zusatzstoffe, zum Beispiel zwei, drei, vier, fünf, sechs oder mehr Zusatzstoffe aufweisen kann. Demgemäß weist eine typische Kakaomischung der vorliegenden Erfindung neben der erfindungsgemäß eingesetzten Palatinose und der Kakaokomponente insbesondere einen Emulgator als Ergänzungsstoff, zum Beispiel Lecithin, einen Mineralstoff, zum Beispiel Natriumchlorid, einen Aromastoff, zum Beispiel Vanillin, und einen Intensivsüßstoff, zum Beispiel Sucralose, auf. In einer weiteren bevorzugten Ausführungsform kann vorgesehen sein, dass die erfindungsgemäße Kakaomischung neben der Kakaokomponente und der Palatinose als Zusatzstoff einen Emulgator wie Lecithin, einen Mineralstoff wie Natriumchlorid, ein Aroma wie Vanillin, einen Intensivsüßstoff wie Sucralose und zusätzlich ein Präbiotikum, zum Beispiel Inulin, Oligofructose und/oder Galactooligosaccharide aufweist.

In einer weiteren bevorzugten Ausführungsform sieht die Erfindung vor, dass in einer Ausführungsform neben der erfindungsgemäß eingesetzten Palatinose und der Kakaokomponente, insbesondere ein Milcherzeugnis, ein Emulgator, zum Beispiel Lezithin, ein Mineralstoff, zum Beispiel Natriumchlorid, ein Aromastoff, zum Beispiel Vanillin, und ein Intensivsüßstoff, zum Beispiel Sucralose, vorhanden ist. Gegebenenfalls kann zusätzlich ein Präbiotikum und/oder Probiotikum vorhanden sein.

In einer weiteren bevorzugten Ausführungsform ist die erfindungsgemäße Kakaomischung eine Malzextrakt-haltige Kakaomischung, zum Beispiel eine Ovomaltine-basierte Mischung, wobei die üblicherweise in Ovomaltine vorhandene Saccharose teilweise oder vollständig ersetzt ist durch Palatinose. In bevorzugter Ausführungsform werden in Ovomaltine 10 bis 30 Gew.-%, vorzugsweise 20 bis 30 Gew.-% Palatinose (bezogen auf Gesamttrockensubstanz von Ovomaltine beziehungsweise der Kakaomischung) eingesetzt. Ovomaltine ist eine Mischung aus kondensierter Magermilch, Malzextrakt, teilweise direkt aus Gerste, Molkenpulver, Glucosesirup, fettarmen Kakao, pflanzlichem Fett und Öl, Hefe, Kochsalz, Mineralsalzen (Kalzium, Magnesium, Eisen), gegebenenfalls Süßstoffen Acesulfam-K und Aspartam, Vitaminen, Aroma, Vanillin, Emulgator Mono- und Diglyceriden, Antioxidantien Ascorbylpalmitat und Alpha-Tocopherol. In bevorzugter Ausführungsform weist eine erfindungsgemäße Malzextrakt- beziehungsweise "Ovomaltine"-basierte Kakaomischung Malzextrakt, insbesondere 20 bis 50 Gew.-% Malzextrakt, Isomaltulose (Palatinose®), vorzugsweise 10 bis 30 Gew.-%, insbesondere 20 bis 30 Gew.-% Isomaltulose, Magermilchpulver, vorzugsweise 5 bis 25 Gew.-% Magermilchpulver, Kakao, vorzugsweise 5 bis 20 Gew.-%, insbesondere 9 bis 20 Gew.-%, Kakao, Molkepulver, insbesondere 5 bis 15 Gew.-% Molkepulver und weitere Bestandteile, insbesondere 1 bis 10 Gew.-% weitere Bestandteile auf (alle Angaben in Bezug auf Gesamttrockensubstanz der Kakaomischung). Als derartige weitere Bestandteile kommen insbesondere Hefe, Magnesiumcarbonat, Calziumphosphat, Öl, Vitamine Salz und Aroma in bevorzugterweise erfindungsgemäß zur Anwendung.

Die Erfindung betrifft in einer besonders bevorzugten Ausführungsform eine Kakaomischung, in der Palatinose der einzig und alleinig in der Kakaomischung vorkommende Zucker ist, das heißt keine weiteren Zucker vorhanden sind. In einer bevorzugten Ausführungsform der vorliegenden Erfindung ist die erfindungsgemäße Kakaomischung lactosefrei. In einer besonders bevorzugten Ausführungsform ist vorgesehen, dass die Palatinose das einzig und alleinig in der Kakaomischung vorkommende körpergebende süßende Agens ist, das heißt keine Zucker und keine Zuckeralkohole oder Zuckeraustauschstoffe vorhanden sind. In einer weiteren bevorzugten Ausführungsform ist vorgesehen, dass die Palatinose das einzig und alleinig vorkommende süßende Agens in der Kakaomischung ist, das heißt abgesehen von Palatinose keine Zucker, keine Intensivsüßstoffe und keine Zuckeraustauschstoffe oder/und Zuckeralkohole in der Kakaomischung vorhanden sind.

Die Erfindung betrifft darüber hinaus mittels der vorgenannten pulver- oder granulatförmigen Kakaomischungen hergestellte Getränke, enthaltend die vorgenannte Kakaomischung sowie ein Lösemittel, zum Beispiel Wasser oder Milch.

Die Erfindung betrifft auch die Verwendung von Palatinose in einer pulver- oder granulatförmigen Kakaomischung, insbesondere in einem Instant-Getränkepulver zur Herstellung eines Kakaogetränkes, zur Verbesserung der Lagerfähigkeit, der Riesel- und/oder Dosierfähigkeit der pulver- oder granulatförmigen Kakaomischung, insbesondere im Vergleich zu üblichen Saccharose-, Glucose- oder Maltodextrin-basierten Getränkepulvern.

Die Erfindung betrifft darüber hinaus die Verwendung von Isomaltulose in einer pulver- oder granulatförmigen Kakaomischung, insbesondere in einem Instant-Getränkepulver zur Herstellung eines Kakaogetränkes, zur Herabsetzung der Hygroskopizität der pulver- oder granulatförmigen Kakaomischung, insbesondere im Vergleich zu üblichen Saccharose-, Glucose- oder Maltodextrin-basierten Getränkepulvern.

Schließlich betrifft die Erfindung auch die Verwendung von Palatinose in einer pulver- oder granulatförmigen Kakaomischung, insbesondere in einem Instant-Getränkepulver zur Herstellung eines Kakaogetränkes, zur Erhöhung der Löslichkeit der Kakaomischung in Milch beziehungsweise in Wasser, insbesondere im Vergleich zu üblichen Saccharose-, Glucose- oder Maltodextrin-basierten Produkten.

Die Erfindung sieht in einer bevorzugten Ausgestaltung vor, dass die erfindungsgemäßen pulver- oder granulatförmigen Kakaomischungen in rieselfähiger Form zur Herstellung von Fertiggetränken verwendet werden. Die Erfindung sieht jedoch auch vor, dass die erfindungsgemäßen Mischungen verpresst und als Tabletten beziehungsweise "Getränketabs" beziehungsweise Komprimate zur Herstellung von Getränken entweder zum Auflösen in Milch oder, bei Anwesenheit von zum Beispiel Milchpulver in der erfindungsgemäßen Kakaomischung, in Wasser eingesetzt werden. Die Erfindung betrifft daher auch komprimierte Kakaomischungen der vorliegenden Erfindung, die unter Einsatz eines zur Herstellung von Tabletten ausreichenden Pressdruckes komprimiert wurden.

Weitere vorteilhafte Ausgestaltungen der Erfindung ergeben sich aus den Untersprüchen.

Die Erfindung wird anhand der folgenden Beispiele näher erläutert.

### Beispiele:

### Beispiel 1

### Herstellung von Kakaogetränken mit Palatinose als einzigem körpergebendem süßenden Agens

Es wurden zwei unterschiedliche Herstellprozesse für die erfindungsgemäßen Kakaomischungen eingesetzt.

### Herstellungsprozesse

(1) Agglomeration (WSG) (Wirbelschichtgranulation):
   Palatinose wird in einer Stiftmühle mit max. Drehzahl vermahlen.
   Für die anschließende Agglomeration wurden folgende Parameter eingestellt:
   Einstellung Pumpe:
      Schlauchinnendurchmesser 1,7 mm, 89 rpm,
      Sprühdruck:4,0 bar
   Sprühlösung (Emulsion):
      270,0 g H₂O, 1,7 % Lecithin, 0,05 % Vanillin, 0,05 % NaCl, ggf. 0,03 % Sucralose.
   Die Sprühlösung wurde auf 60°C erwärmt und anschließend im Wirbelschichtverfahren zusammen mit der vermahlenen Palatinose und Kakaopulver agglomiert.
(2) Herstellung mit einem Lödige-Mischer
   Palatinose wird in einer Stiftmühle mit max. Drehzahl vermahlen.
   Für die Vermischung der Bestandteile wurden folgende Parameter eingestellt:
   Mischzeit / Sprühen: 15 min.
   Sprühlösung (Emulsion):
   270,0 g H₂O, 1,7 % Lecithin, 0,05 % Vanillin, 0,05 % NaCl, ggf. 0,03 % Sucralose.
   Die Sprühlösung wurde auf 60°C erwärmt und anschließend zusammen mit der vermahlenen Palatinose und Kakaopulver vermischt. Falls erforderlich, kann das Produkt nachgetrocknet werden.

In analoger Weise wurden die nachfolgenden Kontrollrezepturen 3 und 4 hergestellt.

**Tabelle 1**

| **Formulierung 1 (Versuchs Nr. MS 213/2), (Agglomeration WSG)** | | |
|---|---|---|
| | **Rohstoff** | **Anteil [%]** |
| 1 | Palatinose | 73,17 % |
| 2 | Kakaopulver | 25,0 % |
| 3 | Lecithin | 1,7 % |
| 4 | Salz NaCl | 0,05 % |
| 5 | Vanillin | 0,05 % |
| 6 | Sucralose | 0,03 % |
| Summe | | 100,00 % |

**Tabelle 2**

| **Formulierung 2 (Versuchs Nr. MS 213/3), (Lödige-Mischer)** | | |
|---|---|---|
| | **Rohstoff** | **Anteil [%]** |
| 1 | Palatinose | 73,15 % |
| 2 | Kakaopulver | 25,0 % |
| 3 | Lecithin | 1,7 % |
| 4 | Salz NaCl | 0,05 % |
| 5 | Vanillin | 0,05 % |
| 6 | Sucralose | 0,05 % |
| Summe | | 100,00 % |

### Vergleichsbeispiele:

**Tabelle 3**

| **Formulierung 3 (Versuchs Nr. MS 213/4), (Agglomeration WSG)** | | |
|---|---|---|
| | **Rohstoff** | **Anteil [%]** |
| | Puderzucker | 55,2 % |
| | Glucose | 23 % |
| | Kakaopulver | 20,0 % |
| | Lecithin | 1,7 % |
| | Salz NaCl | 0,05 % |
| | Vanillin | 0,05 % |
| Summe | | 100,0 % |

**Tabelle 4**

| **Formulierung 4 (Versuchs Nr. MS 213/5), Agglomeration WSG)** | | |
|---|---|---|
| | **Rohstoff** | **Anteil [%]** |
| | Maltodextrin | 55,2 % |
| | Glucose | 23 % |
| | Kakaopulver | 20,0 % |
| | Lecithin | 1,7 % |
| | Salz NaCl | 0,05 % |
| | Vanillin | 0,05 % |
| Summe | | 100,0 % |

### Beispiel 2

### Herstellung von Kakaogetränken mit Palatinose-Inulin als einzigem körpergebundenen Süßungsmittel und als Präbiotikum

(5) Agglomeration (WSG)
   Palatinose wird in einer Stiftmühle mit max. Drehzahl vermahlen.
   Für die Agglomeration wurden folgende Parameter eingestellt:
   Einstellung Pumpe:
      Schlauchinnendurchmesser 1,7 mm, 89 rpm, Sprühdruck: 4,0 bar
   Sprühlösung (Emulsion):
      270,0 g H₂O, 1,7 % Lecithin, 0,05 % Vanillin, 0,05 % NaCl, ggf. 0,03 % Sucralose.
   Die Sprühlösung wurde auf 60°C erwärmt und anschließend im Wirbelschichtverfahren zusammen mit der vermahlenen Palatinose, Inulin und Kakaopulver agglomeriert.
(6) Herstellung mit einem Lödige-Mischer:
   Palatinose wird in einer Stiftmühle, max. Drehzahl vermahlen
   Für die Vermischung der Bestandteile wurden folgende Parameter eingestellt:
   Mischzeit / Sprühen: 15 min.
   Sprühlösung (Emulsion):
   270,0 g H₂O, 1,7 % Lecithin, 0,05 Vanillin, 0,05 NaCl, ggf. 0,03 % Sucralose
   Die Sprühlösung wurde auf 60°C erwärmt und anschließend zusammen mit der vermahlenen Palatinose, Inulin und Kakaopulver vermischt. Falls erforderlich, kann das Produkt nachgetrocknet werden.

**Tabelle 5**

| **Formulierung 5 (Agglomeration WSG)** | | |
|---|---|---|
| | **Rohstoff** | **Anteil [%]** |
| | Palatinose | 50 % |
| | Inulin ST | 23,17 % |
| | Kakaopulver | 25,0 % |
| | Lecithin | 1,7 % |
| | Salz NaCl | 0,05 % |
| | Vanillin | 0,05 % |
| | Sucralose | 0,03 % |
| Summe | | 100,00 % |

**Tabelle 6**

| **Formulierung 6 (Lödige-Mischer)** | | |
|---|---|---|
| | **Rohstoff** | **Anteil [%]** |
| | Palatinose | 50 % |
| | Inulin HP | 23,17 % |
| | Kakaopulver | 25,0 % |
| | Lecithin | 1,7 % |
| | Salz NaCl | 0,05 % |
| | Vanillin | 0,05 % |
| | Sucralose | 0,03 % |
| Summe | | 100,00 % |

### Beispiel 3

Die Rezepturen 1 bis 6 wurden in üblicher Weise in kalter Milch gelöst (10 g in 125 ml Milch) und hinsichtlich des erzielten Gesamtgeschmackprofils und des Süßempfindens von einem Versuchspanel bewertet. Die erzielten Ergebnisse sind in der nachstehenden Tabelle 7 dargestellt. Darüber hinaus wurden mit den Kakaomischungen Lagertests im Stressmodus (25°C, 80 % relative Luftfeuchte, 1 Tag) und Bestimmungen des Böschungswinkels zur Ermittlung des Fließverhaltens gemäß "Die Tablette, Handbuch der Entwicklung, Herstellung und Qualitätssicherung W.A. Ritschel, A. Bauer-Brandl, Kapitel 4/4.8.9 Seite 361, 2. Auflage 2002" durchgeführt.

Die Produkte 1, 2, 5 (Produkt 5 eingeschränkt) und 6 waren im Anschluss an den Lagertest gut dosierbar, während die Produkte 3 und 4 verklumpt waren. Für das Fließverhalten der Kakaomischung wurden die Schüttwinkel bestimmt, wobei sich herausstellte, dass die Produkte 1, 2, 5 und 6 für die Automatendosierung aufgrund ihres besseren Fließverhaltens (geringerer Böschungs- beziehungsweise Schüttwinkel von 30 bis 35°) besonders gut geeignet sind.

**Tabelle 7**

| Produktcharakteristika | 1 | 2 | 3 | 4 | 5 | 6 |
|---|---|---|---|---|---|---|
| Sensorischer Gesamteindruck | + | + | - | - | + | + |
| Süßempfinden | + | + | - | - | + | + |
| Fließverhalten | + | + | ± | - | + | + |
| Lagerverhalten | + | + | - | - | ± | + |

| | | | | | | |
|---|---|---|---|---|---|---|
| Legende: +: positive Bewertung (je nach Charakteristikum: angenehmer runder und harmonischer Geschmack; vergleichsweise angenehme, nicht zu hoch dosierte Süße; geringerer Schüttwinkel (30 bis 35°); keine Verklumpung) -: negative Bewertung (je nach Charakteristikum: weniger angenehmer insbesondere von zu großer Süße überformter Geschmack; vergleichsweise zu große Süße (Übersüße); größerer Schüttwinkel (über 35°); Verklumpung) ±: eingeschränkt positive Bewertung | | | | | | |

## Patentansprüche

1. Pulver- oder granulatförmige Kakaomischung, enthaltend 9 bis 60 Gew.-% (bezogen auf das Gesamtgewicht der Kakaomischung) mindestens einer Kakaokomponente, 1 bis 40 Gew.-% (bezogen auf das Gesamtgewicht der Kakaomischung) mindestens eines Zusatzstoffes und 20 bis 90 Gew.-% (bezogen auf das Gesamtgewicht der Kakaomischung) Palatinose.

2. Kakaomischung nach Anspruch 1, wobei die Kakaomischung ein Instant-Kakaogetränkepulver ist.

3. Kakaomischung nach Anspruch 1 oder 2, wobei der mindestens eine Zusatzstoff ein Präbiotikum, ein Probiotikum, ein Ergänzungsstoff, ein Zucker, ein Süßungsmittel, eine fetthaltige Komponente und/oder ein Milcherzeugnis ist.

4. Kakaomischung nach Anspruch 3, wobei das Präbiotikum Inulin, Oligofructose und/oder Galactooligosaccharide ist (sind).

5. Kakaomischung nach einem der vorhergehenden Ansprüche, wobei zusätzlich zu Palatinose ein weiteres süßendes Agens ausgewählt aus der Gruppe der Zucker, Intensivsüßstoffe und Zuckeraustauschstoffe vorhanden ist.

6. Kakaomischung nach einem der vorhergehenden Ansprüche, wobei der Intensivsüßstoff ausgewählt ist aus der Gruppe bestehend aus Sucralose, Natriumcyclamat, Acesulfam K, Neohesperidin-Dihydrochalkon, Glycyrrhizin, Steveosid, Monellin, Thaumatin, Aspartam, Dulcin, Saccharin, Naringin-Dihydrochalkon, Neotame und einer Mischung zweier oder mehrerer davon.

7. Kakaomischung nach einem der vorhergehenden Ansprüche, wobei der Zuckeraustauschstoff ausgewählt ist aus der Gruppe bestehend aus Isomalt, 1,1-GPM (1-O-α-D-Glucopyranosyl-D-mannit), 1,6-GPS (6-O-α-D-Glucopyranosyl-D-sorbit), 1,1-GPS (1-O-α-D-Glucopyranosyl-D-sorbit), Maltodextrine, Lactit, Maltit, Erythrit, Xylit, Mannit, Sorbit, Maltitsirup, hydrierte und nichthydrierte Stärkehydrolysate und einer Mischung zweier oder mehrerer davon.

8. Kakaomischung nach einem der vorhergehenden Ansprüche, wobei der mindestens eine Zusatzstoff ein Zucker, insbesondere Saccharose, Glucose, Fructose, Lactose, Maltose oder eine Mischung zweier oder mehrerer davon ist, zum Beispiel Malzextrakt.

9. Kakaomischung nach einem der vorhergehenden Ansprüche, wobei der mindestens eine Zusatzstoff ein Milcherzeugnis, insbesondere ein lactose-freies Milcherzeugnis ist.

10. Kakaomischung nach einem der vorhergehenden Ansprüche, wobei das Milcherzeugnis Magermilchpulver, Vollmilchpulver, lactose-freies Magermilchpulver, lactose-freies Vollmilchpulver, ein Molkenerzeugnis oder eine Mischung zweier oder mehrerer davon ist.

11. Kakaomischung nach einem der vorhergehenden Ansprüche, wobei der mindestens eine Zusatzstoff ein Ergänzungsstoff ist, ausgewählt ist aus der Gruppe bestehend aus Malzextrakt, Aromastoffen, Farbstoffen, Geschmacksstoffen, Fließmittel, Mineralstoffen wie Natrium und Calzium, insbesondere Salzen wie Natriumchlorid, Vitaminen, Folsäure, Emulgatoren, Ballaststoffen, Lecithin, Omega-3-Fettsäuren, Triglyzeride mittlerer Kettenlänge, Phythoöstrogene und Ascorbinsäuresalze.

12. Kakaomischung nach einem der Ansprüche 1 bis 11, wobei diese eine 10 bis 30 Gew.-% Palatinose enthaltende Malzextrakt-haltige Mischung ist.

13. Kakaomischung nach einem der Ansprüche 3 bis 11, wobei das Probiotikum Lactobacillen oder Bifidobakterien sind.

14. Kakaomischung nach einem der vorhergehenden Ansprüche, wobei der Aromastoff Vanillin ist.

15. Kakaomischung nach einem der vorhergehenden Ansprüche, wobei die Palatinose das einzige und alleinig in der Kakaomischung vorkommende körpergebende süßende Agens ist.

16. Kakaomischung nach einem der vorhergehenden Ansprüche, wobei die Palatinose der einzige und alleinig in der Kakaomischung vorkommende Zucker ist.

17. Kakaomischung nach einem der vorhergehenden Ansprüche, wobei die Palatinose das einzige und alleinig in der Kakaomischung vorkommende süßende Agens ist.

18. Kakaomischung nach einem der vorhergehenden Ansprüche, wobei die Kakaokomponente Kakaopulver ist, vorzugsweise entöltes Kakaopulver.

19. Kakaomischung nach einem der vorhergehenden Ansprüche, wobei die Kakaomischung 20 bis 30 Gew.-% Kakaopulver (bezogen auf das Gesamttrockengewicht der Kakaomischung) enthält.

20. Kakaomischung nach einem der vorhergehenden Ansprüche, wobei die Kakaomischung 50 bis 75 Gew.-% (bezogen auf das Gesamttrockengewicht der Kakaomischung) Palatinose enthält.

21. Kakaomischung nach einem der vorhergehenden Ansprüche, wobei die Kakaomischung 20 bis 30 Gew.-% (bezogen auf das Gesamttrockengewicht der Kakaomischung) Kakaopulver, 1 bis 30 Gew.-% (bezogen auf das Gesamttrockengewicht der Kakaomischung) mindestens eines Zusatzstoffes und 50 bis 75 Gew.-% (bezogen auf das Gesamttrockengewicht der Kakaomischung) Palatinose enthält.

22. Kakaomischung nach einem der vorhergehenden Ansprüche, wobei mehrere Zusatzstoffe vorhanden sind, nämlich ein Präbiotikum, insbesondere Inulin, ein Emulgator, insbesondere Lecithin, ein Salz, insbesondere Natriumchlorid, ein Aromastoff, insbesondere Vanillin und ein Intensivsüßstoff, insbesondere Sucralose.

23. Kakaomischung nach einem der vorhergehenden Ansprüche, wobei mehrere Zusatzstoffe vorhanden sind, nämlich ein Emulgator, insbesondere Lecithin, ein Salz, nämlich Natriumchlorid, ein Aromastoff, insbesondere Vanillin und ein Intensivsüßstoff, insbesondere Sucralose.

24. Komprimat einer Kakaomischung, hergestellt durch Verpressen einer pulver- oder granulatförmigen Kakaomischung nach einem der Ansprüche 1 bis 23.

25. Getränk, hergestellt aus und enthaltend eine Kakaomischung gemäß einem der Ansprüche 1 bis 23 und ein Lösemittel.

26. Getränk nach Anspruch 25, wobei das Lösemittel Wasser oder Milch ist.

27. Verwendung von Palatinose in einer pulver- oder granulatförmigen Kakaomischung, insbesondere in einem Instant-Getränkepulver zur Herstellung eines Kakaogetränkes, zur Verbesserung der Riesel- und Dosierfähigkeit der pulver- oder granulatförmigen Kakaomischung.

28. Verwendung von Palatinose in einer pulver- oder granulatförmigen Kakaomischung, insbesondere in einem Instant-Getränkepulver zur Herstellung eines Kakaogetränkes, zur Herabsetzung der Hygroskopizität der pulver- oder granulatförmigen Kakaomischung.

29. Verwendung von Palatinose in einer pulver- oder granulatförmigen Kakaomischung, insbesondere in einem Instant-Getränkepulver zur Herstellung eines Kakaogetränkes, zur Erhöhung der Löslichkeit der Kakaomischung in Milch beziehungsweise in Wasser.

30. Verwendung von Palatinose nach einem der Ansprüche 27 bis 29, wobei die Palatinose in der Kakaomischung in einer Menge von 20 bis 90 Gew.-% (bezogen auf das Gesamttrockengewicht der Kakaomischung) vorhanden ist.

31. Verwendung von Palatinose nach einem der vorhergehenden Ansprüche 27 bis 30, wobei die Palatinose der einzige und alleinig in der Kakaomischung vorkommende Zucker, vorzugsweise das einzig und alleinig in der Kakaomischung vorkommende körpergebende süßende Agens und besonders bevorzugt das einzig und alleinig in der Kakaomischung vorkommende süßende Agens ist.

## Claims

1. Powdered or granulated cocoa mixture containing 9 to 60 % by weight (relative to the total weight of the cocoa mixture) of at least one cocoa component, 1 to 40 % by weight (relative to the total weight of the cocoa mixture) of at least one additive, and 20 to 90 % by weight (relative to the total weight of the cocoa mixture) palatinose.

2. Cocoa mixture according to claim 1, whereby the cocoa mixture is an instant cocoa beverage powder.

3. Cocoa mixture according to claim 1 or 2, whereby the at least one additive is a prebiotic, a probiotic, a supplement, a sugar, a sweetening means, a fat-containing component and/or a milk product.

4. Cocoa mixture according to claim 3, whereby inulin, oligofructose and/or galactooligosaccharides is (are) the prebiotic.

5. Cocoa mixture according to any one of the preceding claims, whereby, in addition to palatinose, an additional sweetening agent selected from the group of sugars, intensive sweetening means, and sugar substitutes is present.

6. Cocoa mixture according to any one of the preceding claims, whereby the intensive sweetening means is selected from the group consisting of sucralose, sodium cyclamate, acesulfame K, neohesperidine-dihydrochalcone, glycyrrhicine, steveoside, monellin, thaumatin, aspartame, dulcin, saccharine, naringin-dihydrochalcone, neotame, and a mixture of two or more of these.

7. Cocoa mixture according to any one of the preceding claims, whereby the sugar substitute is selected from the group consisting of isomalt, 1,1-GPM (1-O-α-D-glucopyranosyl-D-mannitol), 1,6-GPS (6-O-α-D-glucopyranosyl-D-sorbitol), 1,1-GPS (1-O-α-D-glucopyranosyl-D-sorbitol), maltodextrins, lactitol, maltitol, erythritol, xylitol, mannitol, sorbitol, maltitol syrup, hydrated and non-hydrated starch hydrolysates, and a mixture of two or more of these.

8. Cocoa mixture according to any one of the preceding claims, whereby the at least one additive is a sugar, in particular sucrose, glucose, fructose, lactose, maltose or a mixture of two or more of these, for example malt extract.

9. Cocoa mixture according to any one of the preceding claims, whereby the at least one additive is a milk product, in particular a lactose-free milk product.

10. Cocoa mixture according to any one of the preceding claims, whereby the milk product is skimmed milk powder, whole milk powder, lactose-free skimmed milk powder, lactose-free whole milk powder, a whey product or a mixture of two or more of these.

11. Cocoa mixture according to any one of the preceding claims, whereby the at least one additive is a supplement and is selected from the group consisting of malt extract, aroma substances, dyes, flavorings, flow aids, minerals such as sodium and calcium, in particular salts such as sodium chloride, vitamins, folic acid, emulsifying agents, dietary fibers, lecithin, omega-3 fatty acids, medium chain length triglycerides, phytoestrogens, and ascorbic acid salts.

12. Cocoa mixture according to any one of the claims 1 to 11, whereby the cocoa mixture is a malt extract based mixture containing 10 to 30 % by weight palatinose.

13. Cocoa mixture according to any one of the claims 3 to 11, whereby lactobacilli or bifidobacteria are the probiotic.

14. Cocoa mixture according to any one of the preceding claims, whereby vanillin is the aroma substance.

15. Cocoa mixture according to any one of the preceding claims, whereby the palatinose is the one and only body-providing sweetening agent present in the cocoa mixture.

16. Cocoa mixture according to any one of the preceding claims, whereby the palatinose is the one and only sugar present in the cocoa mixture.

17. Cocoa mixture according to any one of the preceding claims, whereby the palatinose is the one and only sweetening agent present in the cocoa mixture.

18. Cocoa mixture according to any one of the preceding claims, whereby cocoa powder, preferably oil-depleted cocoa powder, is the cocoa component.

19. Cocoa mixture according to any one of the preceding claims, whereby the cocoa mixture contains 20 to 30 % by weight (relative to the total dry weight of the cocoa mixture) cocoa powder.

20. Cocoa mixture according to any one of the preceding claims, whereby the cocoa mixture contains 50 to 75 % by weight (relative to the total dry weight of the cocoa mixture) palatinose.

21. Cocoa mixture according to any one of the preceding claims, whereby the cocoa mixture contains 20 to 30 % by weight (relative to the total dry weight of the cocoa mixture) cocoa powder, 1 to 30 % by weight (relative to the total dry weight of the cocoa mixture) of at least one additive, and 50 to 75 % by weight (relative to the total dry weight of the cocoa mixture) palatinose.

22. Cocoa mixture according to any one of the preceding claims, whereby several additives are present, namely a prebiotic, in particular inulin, an emulsifying agent, in particular lecithin, a salt, in particular sodium chloride, an aroma substance, in particular vanillin, and an intensive sweetening means, in particular sucralose.

23. Cocoa mixture according to any one of the preceding claims, whereby several additives are present, namely an emulsifying agent, in particular lecithin, a salt, namely sodium chloride, an aroma substance, in particular vanillin, and an intensive sweetening means, in particular sucralose.

24. Compressed form of a cocoa mixture, produced by compressing a powdered or granulated cocoa mixture according to any one of the claims 1 to 23.

25. Beverage, produced from and containing a cocoa mixture according to any one of the claims 1 to 23, and a solvent.

26. Beverage according to claim 25, whereby water or milk is the solvent.

27. Use of palatinose in a powdered or granulated cocoa mixture, in particular in an instant beverage powder for producing a cocoa beverage, to improve the pourability and dosability of the powdered or granulated cocoa mixture.

28. Use of palatinose in a powdered or granulated cocoa mixture, in particular in an instant beverage powder for producing a cocoa beverage, to reduce the hygroscopicity of the powdered or granulated cocoa mixture.

29. Use of palatinose in a powdered or granulated cocoa mixture, in particular in an instant beverage powder for producing a cocoa beverage, to increase the solubility of the cocoa mixture in milk or water.

30. Use of palatinose according to any one of the claims 27 to 29, whereby the palatinose is present at a fraction equal to 20 to 90 % by weight (relative to the total dry weight of the cocoa mixture) of the cocoa mixtures.

31. Use of palatinose according to any one of the preceding claims 27 to 30, whereby the palatinose is the one and only sugar present in the cocoa mixture, preferably is the one and only body-providing sweetening agent, particularly preferably is the one and only sweetening agent in the cocoa mixture.

## Revendications

1. Mélange cacaoté sous forme poudreuse ou granulaire, contenant 9 à 60 % en poids (par rapport au poids total dudit mélange cacaoté) d'au moins un composant de cacao, 1 à 40 % en poids (par rapport au poids total dudit mélange cacaoté) d'au moins un additif et 20 à 90 % en poids (par rapport au poids total dudit mélange cacaoté) de palatinose.

2. Mélange cacaoté selon la revendication 1, ledit mélange cacaoté étant une poudre instantanée pour boissons au cacao.

3. Mélange cacaoté selon les revendications 1 ou 2, l'au moins un additif étant un prébiotique, un probiotique, un agent complémentaire, un sucre, un édulcorant, un composant contenant de la matière grasse et/ou un produit laitier.

4. Mélange cacaoté selon la revendication 3, ledit prébiotique étant de l'inuline, de l'oligofructose et/ou des galactooligosaccharides.

5. Mélange cacaoté selon l'une des revendications précédentes, comprenant, outre le palatinose, un autre édulcorant choisi dans le groupe constitué par les sucres, les édulcorants à fort pouvoir sucrant et les édulcorants de charge.

6. Mélange cacaoté selon l'une des revendications précédentes, ledit édulcorant à fort pouvoir sucrant étant choisi dans le groupe constitué de sucralose, de cyclamate de sodium, d'acésulfame K, de néohespéridine dihydrochalcone, de glycyrrhizine, de stévioside, de monelline, de thaumatine, d'aspartame, de dulcine, de saccharine, de naringine dihydrochalcone, de néotame et d'un mélange de deux ou de plusieurs d'entre eux.

7. Mélange cacaoté selon l'une des revendications précédentes, ledit édulcorant de charge étant choisi dans le groupe constitué d'isomalt, de 1,1-GPM (1-O-α-D-glucopyranosyl-D-mannitol), de 1,6-GPS (6-O-α-D-glucopyranosyl-D-sorbitol), de 1,1-GPS (1-O-α-D-glucopyranosyl-D-sorbitol), de maltodextrines, de lactitol, de maltitol, d'érythritol, de xylitol, de mannitol, de sorbitol, de sirop de maltitol, d'hydrolysats d'amidon hydrogénés ou non-hydrogénés et d'un mélange de deux ou de plusieurs d'entre eux.

8. Mélange cacaoté selon l'une des revendications précédentes, l'au moins un additif étant un sucre, notamment du saccharose, glucose, fructose, lactose, maltose ou un mélange de deux ou de plusieurs d'entre eux, par exemple d'extrait de malt.

9. Mélange cacaoté selon l'une des revendications précédentes, l'au moins un additif étant un produit laitier, notamment un produit laitier exempt de lactose.

10. Mélange cacaoté selon l'une des revendications précédentes, ledit produit laitier étant du lait écrémé en poudre, du lait entier en poudre, du lait écrémé en poudre exempt de lactose, du lait entier en poudre exempt de lactose, un produit à base de petit-lait ou un mélange de deux ou de plusieurs d'entre eux.

11. Mélange cacaoté selon l'une des revendications précédentes, l'au moins un additif étant un agent complémentaire choisi dans le groupe constitué d'extrait de malt, d'arômes, de colorants, d'agents de sapidité, d'agents d'écoulement, de composants minéraux comme le sodium et le calcium, notamment de sels comme le chlorure de sodium, de vitamines, d'acide folique, d'émulsifiants, de fibres alimentaires, de lécithine, d'acides gras oméga-3, de trigycérides à chaîne moyenne, de phytoestrogènes et de sels d'acide ascorbique.

12. Mélange cacaoté selon l'une des revendications 1 à 11, s'agissant d'un mélange contenant de l'extrait de malt, la teneur en palatinose dudit mélange étant comprise entre 10 et 30 % en poids.

13. Mélange cacaoté selon l'une des revendications 3 à 11, le probiotique étant constitué de lactobacilles ou de bifidobactéries.

14. Mélange cacaoté selon l'une des revendications précédentes, l'arôme étant de la vanilline.

15. Mélange cacaoté selon l'une des revendications précédentes, le palatinose étant le seul et unique édulcorant de charge que ledit mélange cacaoté contient.

16. Mélange cacaoté selon l'une des revendications précédentes, le palatinose étant le seul et unique sucre que ledit mélange cacaoté contient.

17. Mélange cacaoté selon l'une des revendications précédentes, le palatinose étant le seul et unique édulcorant que ledit mélange cacaoté contient.

18. Mélange cacaoté selon l'une des revendications précédentes, ledit composant de cacao étant de la poudre de cacao, de préférence de la poudre de cacao dégraissé.

19. Mélange cacaoté selon l'une des revendications précédentes, ledit mélange cacaoté contenant 20 à 30 % en poids de poudre de cacao (par rapport au poids sec total du mélange cacaoté).

20. Mélange cacaoté selon l'une des revendications précédentes, ledit mélange cacaoté contenant 50 à 75 % en poids de palatinose (par rapport au poids sec total du mélange cacaoté).

21. Mélange cacaoté selon l'une des revendications précédentes, ledit mélange cacaoté contenant 20 à 30 % en poids (par rapport au poids sec total dudit mélange cacaoté) de poudre de cacao, 1 à 30 % en poids (par rapport au poids sec total dudit mélange cacaoté) d'au moins un additif et 50 à 75 % en poids (par rapport au poids sec total dudit mélange cacaoté) de palatinose.

22. Mélange cacaoté selon l'une des revendications précédentes, plusieurs additifs étant présents, à savoir un prébiotique, notamment l'inuline, un émulsifiant, notamment la lécithine, un sel, notamment le chlorure de sodium, un arôme, notamment la vanilline et un édulcorant à fort pouvoir sucrant, notamment le sucralose.

23. Mélange cacaoté selon l'une des revendications précédentes, plusieurs additifs étant présents, à savoir un émulsifiant, notamment la lécithine, un sel, notamment le chlorure de sodium, un arôme, notamment la vanilline et un édulcorant à fort pouvoir sucrant, notamment le sucralose.

24. Produit comprimé à base d'un mélange cacaoté, réalisé en compactant un mélange cacaoté sous forme poudreuse ou granulaire selon l'une des revendications 1 à 23.

25. Boisson, réalisée à partir d'un mélange cacaoté selon l'une des revendications 1 à 23 et contenant ledit mélange ainsi qu'un solvant.

26. Boisson selon la revendication 25, ledit solvant étant de l'eau ou du lait.

27. Utilisation de palatinose dans un mélange cacaoté sous forme poudreuse ou granulaire, notamment dans une poudre instantanée pour boissons destinée à préparer une boisson au cacao, visant à améliorer la coulabilité et l'aptitude au dosage dudit mélange cacaoté sous forme poudreuse ou granulaire.

28. Utilisation de palatinose dans un mélange cacaoté sous forme poudreuse ou granulaire, notamment dans une poudre instantanée pour boissons destinée à préparer une boisson au cacao, visant à réduire l'hygroscopicité dudit mélange cacaoté sous forme poudreuse ou granulaire.

29. Utilisation de palatinose dans un mélange cacaoté sous forme poudreuse ou granulaire, notamment dans une poudre instantanée pour boissons destinée à préparer une boisson au cacao, visant à augmenter la solubilité dudit mélange cacaoté dans du lait ou, respectivement, dans de l'eau.

30. Utilisation de palatinose selon l'une des revendications 27 à 29, ledit palatinose étant présent dans ledit mélange cacaoté dans une quantité comprise entre 20 et 90 % en poids (par rapport au poids sec total du mélange cacaoté).

31. Utilisation de palatinose selon l'une des revendications 27 à 30 précédentes, ledit palatinose étant le seul et unique sucre que ledit mélange cacaoté contient, de préférence le seul et unique édulcorant de charge que ledit mélange cacaoté contient et, avec une préférence particulière, le seul et unique édulcorant que ledit mélange cacaoté contient.
